# EUROPÄISCHE PATENTSCHRIFT

(11) **EP 2 165 635 B1**
(45) Veröffentlichungstag und Bekanntmachung des Hinweises auf die Patenterteilung: **21.06.2017**
(21) Anmeldenummer: 09010976.0
(22) Anmeldetag: 27.08.2009
(51) Int. Cl.: A47L 15/00, A47L 15/42, C02F 1/44, C02F 103/04, B01D 61/02

(54) **Geschirrspülmaschinen mit Niedertemperatur-Nachspülung**
Dish washers with low temperature rinsing
Lave-vaisselles dotés d'un post-rinçage à basse température

(30) Priorität: 23.09.2008 DE 102008048491
(43) Veröffentlichungstag der Anmeldung: 24.03.2010
(73) Patentinhaber: MEIKO Maschinenbau GmbH & Co. KG, 77652 Offenburg (DE)
(72) Erfinder: Peukert, Thomas, 77815 Bühl (DE); Rauber, Hans-Josef, 77784 Oberhamersbach (DE); Schneider, Vera, 77654 Offenburg (DE); Scheringer, Stefan, 77654 Offenburg (DE)
(74) Vertreter: Hörschler, Wolfram Johannes

(56) Entgegenhaltungen:
- WO-A1-2005/046420
- WO-A1-2005/063109
- DE-A1- 4 305 020
- DE-A1-102005 039 140
- DE-A1-102007 025 245

## Beschreibung

### Gebiet der Erfindung

Die Erfindung betrifft ein Verfahren und eine Reinigungsvorrichtung zum Reinigen von Reinigungsgut. Derartige Verfahren und Reinigungsvorrichtungen werden zum Reinigen von Reinigungsgut aller Art in verschiedenen Bereichen des täglichen Lebens, im Krankenhaus- und Pflegebereich, zur Reinigung von Maschinenteilen und anderen Arten von Reinigungsgut in der Technik sowie in verschiedenen Bereichen der Medizin und Naturwissenschaften eingesetzt. Ohne Beschränkung möglicher weiterer Einsatzzwecke wird die Erfindung im Folgenden insbesondere unter Bezugnahme auf Geschirrspülmaschinen beschrieben, welche eingerichtet sind, um Geschirr wie beispielsweise Gläser, Tassen, Besteck, Teller, Tabletts oder sonstige Arten von Gegenständen, welche direkt oder indirekt mit Speisen und Getränken in Berührung kommen können oder welche rundum bei einer Speisenzubereitung eingesetzt werden können, zu reinigen.

### Stand der Technik

Aus verschiedenen Bereichen des täglichen Lebens, der Naturwissenschaften und Technik, der Medizin oder aus anderen Bereichen sind Reinigungsvorrichtungen zur Reinigung verschiedenster Arten von Reinigungsgut bekannt. Die folgende Beschreibung bezieht sich insbesondere auf Geschirrspülmaschinen, bei welchen im Rahmen eines Programmablaufs Geschirr der oben beschriebenen Art mit Reinigungsflüssigkeiten verschiedener Art beaufschlagt wird. Dies kann insbesondere in einer Reinigungskammer erfolgen. Verschiedene Arten von Geschirrspülmaschinen sind aus dem Stand der Technik bekannt. Grundsätzlich wird zunächst unterschieden zwischen Einkammer- und Mehrkammer-Geschirrspülmaschinen. Die im Folgenden beschriebene Erfindung ist grundsätzlich für alle Arten von Geschirrspülmaschinen geeignet, ist jedoch besonders vorteilhaft für Einkammer-Geschirrspülmaschinen einsetzbar, bei welchen das Reinigungsgut während des Reinigungsverfahrens nicht transportiert wird. In derartigen Geschirrspülmaschinen können Reinigungsprogramme mit einem oder mehreren Reinigungsschritten ablaufen.

Eine weitere Unterscheidung von Geschirrspülmaschinen erfolgt grundsätzlich in Geschirrspülmaschinen für den Haushaltsbereich und Geschirrspülmaschinen für die gewerbliche Nutzung. Während erstere Geschirrspülmaschinen in der Regel mit einem so genannten Einkreis-System ausgestattet werden, bei welchem ein und derselbe Reinigungskreis für den eigentlichen Reinigungsvorgang (im Folgenden auch Waschvorgang genannt) und einen Nachspülvorgang eingesetzt wird, werden Geschirrspülmaschinen für den gewerblichen Einsatz in der Regel als Zweikreis-Reinigungsvorrichtungen ausgestaltet. Bei derartigen Zweikreis-Reinigungsvorrichtungen ist ein Zweikreis-Spülsystem vorgesehen, bei welchem für den Waschvorgang und den Nachspülvorgang zumindest teilweise getrennte Spülsysteme vorgesehen sind. Die vorliegende Erfindung ist grundsätzlich wiederum auf alle Arten von Geschirrspülmaschinen einsetzbar, ist jedoch besonders bevorzugt einsetzbar in gewerblichen Geschirrspülmaschinen mit Zweikreis-Spülsystemen.

Aus DE 43 05 020 A1 ist eine Haushalt-Geschirrspülmaschine mit einem aus mehreren Teil-Programmschritten zusammengesetzten Spülprogramm bekannt. Die Geschirrspülmaschine umfasst eine Umkehr-Osmose-Einrichtung, in der eingeleitetes Wasser in einen Teil Permeat und einen Teil Konzentrat umgewandelt wird. Dabei wird das Permeat in einem Teil-Programmschritt "Klarspülen" als Spülflüssigkeit verwendet.

Gewerbliche Geschirrspülmaschinen besitzen üblicherweise ein Tanksystem, in welchem eine Spüllauge für einen Waschvorgang vorgehalten wird. Mit dieser wird, ohne dass diese nach einem Reinigungszyklus verworfen wird, immer wieder eingebrachtes Reinigungsgut gereinigt, um dieses von anhaftenden Verunreinigungen zu reinigen. Nach dem Waschvorgang oder Reinigungsvorgang wird über ein zusätzliches Klarspülsystem Frischwasser, das in einem Boiler oder einem Durchlauferhitzer erwärmt wurde, auf das Reinigungsgut aufgebracht. Dieses eingebrachte Klarspülwasser ist im Allgemeinen mit mindestens einem Klarspülmittel versetzt und wird ganz oder teilweise dazu verwendet, um die Spüllauge für den Waschvorgang zu regenerieren. Aus EP 0 133 677 A2 sind ein Verfahren und eine Vorrichtung zur Demineralisierung von Wasser für eine Geschirrspülmaschine bekannt. Dabei wird Wasser, welches für einen dritten Spülschritt verwendet wird, mittels einer Umkehrosmose demineralisiert.

Gewerbliche Geschirrspülmaschinen mit Zweikreissystem werden hauptsächlich in Betrieben mit hohem Durchsatz an Reinigungsgut eingesetzt, beispielsweise in der Gastronomie oder in Kantinen in Betrieben, Krankenhäusern, Behörden, Schulen, Pflegeheimen oder ähnlichen Einrichtungen. Dies ist insbesondere dadurch begründet, dass sich derartige Maschinen durch sehr kurze Zykluszeiten auszeichnen, beispielsweise Zykluszeiten von weniger als 60 Sekunden bis hin zu wenigen Minuten. Insofern sind derartige Geschirrspülmaschinen für einen hohen Durchsatz eingerichtet.

Um trotz des hohen Durchsatzes eine erforderliche Hygienewirkung am Reinigungsgut zu erreichen, gibt es zwei wesentliche Vorgehensweisen. Die eine Vorgehensweise, welche überwiegend in europäischen Ländern eingesetzt wird, verwendet zur Klarspülung Frischwasser, welches auf eine hohe Temperatur erhitzt wurde. Üblicherweise werden Temperaturen im Bereich von ca. 85°C eingesetzt. Dieses Klarspülwasser wird um ein Klarspülmittel angereichert und dann in ausreichender Menge auf das frisch gereinigte Reinigungsgut, beispielsweise Geschirr, aufgespritzt, so dass sich neben einem Abspüleffekt zur Beseitigung von anhaftender Waschlauge auch ein thermischer Hygienisierungseffekt ergibt. Am Ende des Reinigungsprogramms befindet sich das Reinigungsgut dann sowohl in einem optisch als auch in einem sensorisch und hygienisch einwandfreien Zustand.

In einer alternativen Methode, welche überwiegend im nordamerikanischen Gebiet eingesetzt wird, beispielsweise in den USA, wird ein überwiegend thermo-chemischer Hygienisierungseffekt angestrebt. Dieser wird dadurch erreicht, dass das Klarspülwasser auf eine vergleichsweise niedrige Temperatur erwärmt wird. Beispielsweise lassen sich hierbei Temperaturen von ca. 49°C einsetzen. Gleichzeitig wird dem Klarspülwasser jedoch ein Desinfektionsmittel, beispielsweise ein Klarspülmittel mit einem Desinfektionsmittelanteil, beigemengt. Übliche Desinfektionsmittel dieser Art sind Desinfektionsmittel auf Chlorbasis, welche auch als "Sanitizer" bezeichnet werden. Die Verwendung derartiger Sanitizer, einschließlich der erforderlichen Konzentrationen der Sanitizer für einen ordnungsgemäßen Betrieb, sind beispielsweise im so genannten NSF3-Standard beschrieben. Ein Vorteil dieser zweiten Alternative besteht darin, dass der Energieverbrauch beim Aufheizen des Klarspülwassers gegenüber der zuerst beschriebenen Methode erheblich geringer ist. Zusätzlich können sich etwas verkürzte Programmlaufzeiten ergeben, was überwiegend durch die verringerten Aufheizzeiten und/oder verringerten Abkühlzeiten des Reinigungsguts bedingt ist. Ein weiterer wichtiger Vorteil der Niedertemperatur-Klarspülung besteht darin, dass thermisch empfindliche Spülgüter, insbesondere Trinkgläser, thermisch weniger belastet werden und so mit einem geringeren Beschädigungsrisiko ausgesetzt werden. Zudem lässt sich das Reinigungsgut, beispielsweise die Gläser, schneller wieder verwenden, da geringere Abkühlzeiten für dieses Reinigungsgut erforderlich sind als beim beschriebenen ersteren Verfahren.

Ein wesentlicher Nachteil des thermo-chemischen Verfahrens besteht jedoch darin, dass das Reinigungsgut, beispielsweise Trinkgläser, am Programmende in vielen Fällen stark den Geruch des Desinfektionsmittels angenommen haben und beispielsweise einen intensiven Chlorgeruch ausströmen. Diese sensorische Auffälligkeit ist in vielen Fällen stark ausgeprägt und dauerhaft, so dass Getränke, welche später in derartig behandelten Gläsern dargereicht werden, in ihrem Geruch und Geschmack massiv negativ beeinflusst sein können.

Beide bekannte Verfahren sind also mit Nachteilen verbunden. Während das Hochtemperatur-Nachspülverfahren überwiegend mit energetischen Nachteilen verbunden ist, ist das thermo-chemische Nachspülverfahren mit einer verstärkten Umweltbelastung und einer sensorischen Beeinflussung des Reinigungsgutes behaftet.

Daneben werden im Stand der Technik zahlreiche Spülverfahren beschrieben, welche insbesondere eine Verbesserung des Reinigungseffektes und/oder eine Einsparung von Spülflüssigkeit zum Zweck haben. So beschreibt beispielsweise US 5,401,421 eine Geschirrspülmaschine mit einer Umkehrosmosevorrichtung. Die Umkehrosmosevorrichtung wird eingesetzt, um verbrauchte Spülflüssigkeit wieder aufzubereiten und erneut dem Spülsystem zuzuführen. Auch derartige Vorrichtungen lösen jedoch grundsätzlich nicht die oben beschriebene Problematik bekannter Nachspülverfahren, welche entweder vergleichsweise Energie-ineffizient arbeiten oder mit einer hohen Belastung für die Umwelt oder das Spülgut verbunden sind.

### Aufgabe der Erfindung

Aufgabe der vorliegenden Erfindung ist es somit, ein Verfahren und eine Reinigungsvorrichtung zum Reinigen von Reinigungsgut bereitzustellen, welche die oben beschriebenen Nachteile bekannter Verfahren und Vorrichtungen zumindest weitgehend vermeiden. Insbesondere soll auch bei niedrigen Nachspültemperaturen ein hygienisch einwandfreies Spülergebnis erreicht werden, bei welchem das Reinigungsgut optisch und sensorisch nach dem Reinigungsvorgang hohen Qualitätsstandards genügt.

### Offenbarung der Erfindung

Diese Aufgabe wird durch ein Verfahren und eine Reinigungsvorrichtung mit den Merkmalen der unabhängigen Ansprüche gelöst. Vorteilhafte Weiterbildungen der Erfindung, welche sowohl einzeln als auch in Kombination realisierbar sind, sind in den Unteransprüchen dargestellt. Dabei ist die vorgeschlagene Reinigungsvorrichtung vorzugsweise ausgestaltet, um ein erfindungsgemäßes Verfahren durchzuführen, und das Verfahren verwendet vorzugsweise eine erfindungsgemäße Reinigungsvorrichtung. Insofern kann für mögliche Ausgestaltungen des Verfahrens auf die Beschreibung der Reinigungsvorrichtung verwiesen werden, und für mögliche Ausgestaltungen der Reinigungsvorrichtung auf die Beschreibung des Verfahrens. Beispielsweise können Verfahrensmerkmale durch entsprechende Vorrichtungen zur Durchführung dieser Verfahrensmerkmale in der Reinigungsvorrichtung umgesetzt sein.

Das Verfahren und die Reinigungsvorrichtung dienen der Reinigung von Reinigungsgut, insbesondere von Reinigungsgut der oben beschriebenen Art. Ohne Beschränkung weiterer Einsatzmöglichkeiten wird im Folgenden insbesondere die Verwendung zur Reinigung von Geschirr beschrieben, da die Vorteile der Erfindung sich in Geschirrspülmaschinen besonders bemerkbar machen. Insbesondere kann es sich bei diesen Geschirrspülmaschinen um gewerbliche Geschirrspülmaschinen, also Geschirrspülmaschinen mit Zweikreissystemen, handeln.

Bei dem vorgeschlagenen Verfahren wird das Reinigungsgut mindestens einem Waschvorgang unterzogen. Unter einem Waschvorgang ist dabei ein Vorgang zu verstehen, bei welchem an dem Reinigungsgut anhaftender Schmutz zumindest weitgehend entfernt wird. Beispielsweise kann es sich bei diesem Schmutz um Speisereste oder sonstige Verunreinigungen handeln. Zur Durchführung dieses Waschvorgangs kann die Reinigungsvorrichtung beispielsweise mindestens eine Reinigungskammer aufweisen, in welcher das Reinigungsgut mit einer Waschflüssigkeit beaufschlagt wird. Diese Waschflüssigkeit kann beispielsweise Wasser mit einem oder mehreren Reinigerzusätzen sein, welches auch als Waschlauge bezeichnet wird. Beispielsweise kann die Reinigungsvorrichtung einen Waschkreislauf zur Durchführung des Waschvorgangs aufweisen, beispielsweise einen Waschkreislauf, in welchem das Reinigungsgut im Umwälzbetrieb mittels einer Umwälzpumpe gewaschen wird. Wie oben dargestellt, ist es besonders bevorzugt, wenn die Reinigungsvorrichtung lediglich eine derartige Reinigungskammer umfasst, also als Einkammer-Reinigungsvorrichtung ausgestaltet ist. Grundsätzlich ist jedoch auch eine andere Ausgestaltung möglich.

Der Waschvorgang kann auch mehrere Teil-Waschvorgänge umfassen, beispielsweise Waschvorgänge mit unterschiedlichen Reinheitsgraden der Waschflüssigkeit und/oder mit unterschiedlichen Zusammensetzungen der Waschflüssigkeit. Verschiedene Ausgestaltungen sind möglich.

Nach Beendigung des Waschvorgangs wird das Reinigungsgut mindestens einem Nachspülvorgang unterzogen. Dieser Nachspülvorgang dient insbesondere dazu, am Reinigungsgut anhaftende Reste der Waschflüssigkeit zu entfernen und eine einwandfreie Trocknung des Reinigungsguts zu gewährleisten. Dabei wird erfindungsgemäß, zur Lösung der oben beschriebenen Problematik, vorgeschlagen, den Nachspülvorgang in mindestens zwei Teilschritte zu unterteilen. Auch mehr als zwei Teilschritte können jedoch vorgesehen sein. Dabei wird in einem ersten Teilschritt das Reinigungsgut mit einer ersten Klarspülflüssigkeit beaufschlagt. Unter einer Klarspülflüssigkeit ist dabei eine Flüssigkeit zu verstehen, welche geeignet ist, um anhaftende Waschflüssigkeit von dem Reinigungsgut zu entfernen. Diese Klarspülflüssigkeit kann beispielsweise ein oder mehrere Klarspülmittel umfassen, also Tenside, welche einen rückstandsfreien Trocknungseffekt erzielen. Im Rahmen der vorliegenden Erfindung kann jedoch auf derartige Tenside auch vollständig verzichtet werden. Der erste Teilschritt des Nachspülvorgangs kann im Umwälzbetrieb durchgeführt werden, wird jedoch vorzugsweise im einmaligen Betrieb durchgeführt, bei welchem die Klarspülflüssigkeit nicht umgewälzt wird, sondern lediglich einfach auf das Reinigungsgut aufgebracht, beispielsweise aufgesprüht, wird.

Erfindungsgemäß wird vorgesehen, dass die erste Klarspülflüssigkeit ein Desinfektionsmittel enthält. Ein Desinfektionsmittel ist dabei im Rahmen der vorliegenden Erfindung eine Substanz, welche eine deutlich keimreduzierende Wirkung aufweist. Beispielsweise können dabei Desinfektionsmittel auf Chlor-Basis und/oder andere Arten von Desinfektionsmitteln eingesetzt werden. Beispielsweise lassen sich die oben beschriebenen Desinfektionsmittel nach dem NSF3-Standard oder anderen Standards einsetzen. Insofern können das vorgeschlagene Verfahren und die entsprechend eingerichtete Reinigungsvorrichtung beispielsweise Verfahren und Vorrichtungen nach dem NSF3-Standard entsprechen, abgesehen davon, dass die Verwendung von Klarspülmittelzusätzen in der ersten Klarspülflüssigkeit nicht notwendigerweise erforderlich ist, wie sich aus dem Folgenden ergibt.

Erfindungsgemäß folgt, mittelbar oder unmittelbar, auf den mindestens einen ersten Teilschritt mindestens ein zweiter Teilschritt in dem Nachspülvorgang. In diesem zweiten Teilschritt wird das Reinigungsgut mit einer zweiten Klarspülflüssigkeit beaufschlagt. Diese zweite Klarspülflüssigkeit umfasst mindestens ein mittels einer Umkehrosmose erzeugtes Permeat.

Unter einer Umkehrosmose oder Reversosmose wird dabei ein physikalisches/chemisches Verfahren zur Aufkonzentrierung von in Flüssigkeiten gelösten Stoffen verstanden, bei welcher mittels einer Druckbeaufschlagung ein natürlicher Osmose-Prozess umgekehrt wird. Dabei wird mindestens eine semipermeable Membran verwendet, welche ein Konzentrat, in welchem die Konzentration mindestens eines Stoffes erhöht werden soll, von dem so genannten Permeat, in welchem die Konzentration des Stoffes erniedrigt werden soll, trennt. Das Konzentrat wird dabei einem erhöhten Druck ausgesetzt, welcher in der Regel höher ist, als der durch osmotischen Druck unter den gegebenen Bedingungen. Hierdurch können die Permeat-Bestandteile, für welche die Membran durchlässig ist, entgegen ihrer osmotischen Ausbreitungsrichtung in den Raum des Permeats wandern, in welchem die gelösten Stoffe, beispielsweise Verunreinigungen, bereits geringer konzentriert sind und/oder überhaupt nicht vorhanden sind.

Besonders bevorzugt wird als Grundlage für die Erzeugung des Permeats Wasser, vorzugsweise Trinkwasser, verwendet, so dass es sich bei dem Permeat vorzugsweise um Reinstwasser handelt. Vorzugsweise wird mindestens eine Membran eingesetzt, welche für Wassermoleküle durchlässig ist, welche jedoch für mindestens eine Verunreinigung undurchlässig ist. Vorzugsweise enthält diese mindestens eine Verunreinigung, für welche die Membran undurchlässig ist, mindestens einen mineralischen Bestandteil des Trinkwassers, wie beispielsweise Salze, Karbonate, Sulfate oder ähnliche Bestandteile oder Teile der genannten und/oder anderer Substanzen, wie beispielsweise Ionen wie Carbonationen, Sulfationen oder ähnliche Ionen. Insbesondere kann es sich bei den Verunreinigungen also um Verunreinigungen handeln, welche üblicherweise beim Trocknen auf Geschirr, insbesondere Gläsern, zu sichtbaren Rückständen führen können, beispielsweise so genannten "Kalkrückständen". Das Permeat ist somit besonders geeignet, um eine rückstandsfreie Trocknung auf dem Reinigungsgut zu gewährleisten, auch ohne Zusatz von Klarspülmitteln. Auch mehrstufige Umkehrosmosen können eingesetzt werden.

Das erfindungsgemäße Verfahren und die erfindungsgemäße Reinigungsvorrichtung weisen gegenüber herkömmlichen Verfahren und Vorrichtungen eine Vielzahl von Vorteilen auf. So werden beispielsweise die Vorteile des thermo-chemischen Niedertemperatur-Nachspülverfahrens, beispielsweise nach dem NSF3-Standard, mit den Vorteilen der Hochtemperatur-Klarspülung kombiniert. Der thermo-chemische Hygienisierungseffekt, welcher durch das mindestens eine Desinfektionsmittel bewirkt wird, wird zumindest überwiegend vom ersten Teilschritt übernommen und zeitlich getrennt vom Effekt der rückstandsfreien Abspülung und/oder Klarspülung des Reinigungsguts, welche zumindest weitgehend vom zweiten Teilschritt übernommen wird. Dadurch lassen sich in dem ersten Teilschritt zunächst die gewünschten Hygienisierungen erzielen, gefolgt von dem zweiten Teilschritt, in welchem wiederum Desinfektionsmittelreste rückstandsfrei entfernt werden können, so dass das Reinigungsgut sensorisch einwandfrei vorliegt.

Besonders bevorzugt ist es dabei, wenn die zweite Klarspülflüssigkeit im Wesentlichen frei ist von Klarspülerzusätzen. Unter "im Wesentlichen frei" wird dabei ein Zustand verstanden, bei welchem der zweiten Klarspülflüssigkeit nicht gezielt ein Klarspülmittel als Klarspülerzusatz beigemengt wird, insbesondere kein Tensid. Lediglich überschüssige, beispielsweise an Rohrinnenwänden anhaftende Klarspülerzusätze können dann noch in der zweiten Klarspülflüssigkeit enthalten sein. Durch die Verwendung des durch die Umkehrosmose erzeugten Permeats, welches vorzugsweise einen Leitwert von weniger als 100 µS, insbesondere von weniger als 80 µS, aufweist, wird sichergestellt, dass keine Trocknungsflecken, beispielsweise Kalkflecken, auf dem Reinigungsgut auftreten können, auch ohne dass entsprechende Tenside als Klarspülerzusätze eingesetzt werden müssen. Insofern kann beispielsweise reines Permeat, insbesondere durch Umkehrosmose erzeugtes Reinstwasser, als zweite Klarspülflüssigkeit verwendet werden. Der erste Vorteil der Verwendung von Permeat, insbesondere Reinstwasser, als zweite Klarspülflüssigkeit oder zumindest als Bestandteil der zweiten Klarspülflüssigkeit zum Nachspülen, insbesondere zum Klarspülen in Gläser-Geschirrspülmaschinen, liegt darin, dass das Reinigungsgut nahezu vollständig frei von Flecken oder sonstigen optischen Beeinträchtigungen abtrocknen kann.

Der zweite Vorteil der Verwendung von Permeat, insbesondere Reinstwasser, als zweite Klarspülflüssigkeit, liegt darin, dass die Temperatur mit der der zweite Klarspül- Schritt durchgeführt wird niedrig sein kann, z.B. 40 °C. bis 50 °C, denn das Permeat aus der Umkehrosmose ist nicht nur zumindest nahezu frei von gelösten Stoffen, sondern prinzipbedingt auch zumindest nahezu keimfrei. Da das Permeat, welches für die Nachspülung zum Einsatz kommt, vorzugsweise nicht längere Zeit bevorratet wird, sondern zeitnah vor dem Bedarf erzeugt wird, kann eine erneute Verkeimung trotz der niedrigen Temperaturen ausgeschlossen werden. So kann die zweite Klarspülflüssigkeit beispielsweise auf eine Temperatur zwischen 24°C und 90°C, insbesondere auf eine Temperatur zwischen 40 °C und 55 °C, und besonders bevorzugt auf eine Temperatur von 49 °C erwärmt werden.

Wie oben schon angedeutet, kann der erste Teilschritt allgemein bei niedrigen Temperaturen durchgeführt werden. Besonders bevorzugt ist es, wenn der erste Teilschritt bei einer Temperatur der ersten Klarspülflüssigkeit durchgeführt wird, welche zwischen 24 °C und 90 °C, insbesondere zwischen 40 °C und 70 °C, und besonders bevorzugt bei ca. 49 °C liegt Insofern können die bekannten NSF3-Standards weiterhin eingesetzt werden. In Ausnahmefällen lässt der NSF3- Standard sogar eine Temperatur von lediglich 24 °C zu. Die vorgeschlagene Reinigungsvorrichtung und das vorgeschlagene Verfahren entsprechen also vorzugsweise nach wie vor dem NSF3-Standard und fügen sich dementsprechend problemlos in bekannte Standards und Protokolle ein.

Grundsätzlich kann sich durch die Aufteilung des Nachspülvorgangs in die mindestens zwei Teilschritte mit den mindestens zwei Klarspülflüssigkeiten die Gesamtmenge an Klarspülflüssigkeit gegenüber bekannten Verfahren erhöhen. Dies kann insbesondere dadurch erfolgen, dass, verfahrensbedingt, anteilig zum reinen Permeat eine bestimmte Menge an Konzentrat anfällt, was gegenüber einer Klarspülung mit normalem Frischwasser aus einer bauseitigen Versorgung den Wasserverbrauch der Reinigungsvorrichtung erhöhen kann. Das Verhältnis von Permeat zu Konzentrat kann beispielsweise 1:1 Volumenanteile betragen. Hierdurch könnte es beispielsweise dazu kommen, dass ein Wasserverbrauch einer derartigen Gläser-Geschirrspülmaschine von beispielsweise 2,5 Litern pro Spülzyklus gemäß dem Stand der Technik auf nominal 7,5 Liter pro Spülzyklus ansteigen würde, was durch die Hinzufügung des zweiten Teilschritts einschließlich der erforderlichen Menge an Konzentrat aus der Umkehrosmose bedingt wäre. Dadurch, dass der Nachspülvorgang bzw. Klarspülvorgang (beide Begriffe werden im Rahmen der vorliegenden Erfindung weitgehend synonym verwendet) zweiteilig ausgestaltet ist, lässt sich jedoch grundsätzlich die Menge der Klarspülflüssigkeiten für die einzelnen Teilschritte reduzieren, so dass insgesamt beispielsweise ein Spülzyklus nach dem erfindungsgemäßen Verfahren mit zumindest näherungsweise derselben Menge an Klarspülflüssigkeit insgesamt auskommen kann wie herkömmliche Verfahren. Beispielsweise lässt sich ein Spülzyklus nach dem erfindungsgemäßen Verfahren mit insgesamt 3,0 Litern Klarspülwassermenge durchführen, zuzüglich der anfallenden Menge aus Konzentrat aus der Umkehrosmose.

Auch das Konzentrat aus der Umkehrosmose lässt sich jedoch erfindungsgemäß weiter verwenden, so dass auch dieser Anteil gewinnbringend eingesetzt werden kann. So kann dieses Konzentrat, welches bei der Umkehrosmose anfällt, beispielsweise in dem mindestens einen Waschvorgang beziehungsweise in mindestens einen Teilschritt des mindestens einen Waschvorgangs, eingesetzt werden. Besonders bevorzugt ist es jedoch, wenn die erste Klarspülflüssigkeit das bei der Umkehrosmose anfallende Konzentrat umfasst. Beispielsweise kann dieses Konzentrat, mit oder ohne Zusatz weiterer Flüssigkeiten, beispielsweise Wasser, eingesetzt werden und mit dem mindestens einen Desinfektionsmittel zu der mindestens einen ersten Klarspülflüssigkeit ergänzt werden. Da sich an den ersten Teilschritt des Nachspülvorgangs der mindestens eine zweite Teilschritt anschließt, spielt es eine untergeordnete Rolle, dass das Konzentrat eine höhere Konzentration an Verunreinigungen, beispielsweise mineralischen Bestandteilen, aufweist. Derartige Verunreinigungen werden in dem mindestens einen, sich anschließenden zweiten Teilschritt abgespült und verschlechtern das Spülergebnis nicht. Auf diese Weise lässt sich durch geschickte Aufteilung des Rohwassers in das Konzentrat und das Permeat und die Zweiteilung des Nachspülvorgangs eine jeweils optimierte Anpassung der Klarspülflüssigkeiten an den jeweiligen Bedarf im vorliegenden Teilschritt vornehmen. Hierdurch lässt sich, in Zusammenwirken mit der oben beschriebenen Trennung zwischen Hygienisierung und optimaler Abtrocknung, das Spülergebnis in optischer und sensorischer Hinsicht noch zusätzlich verbessern. Insbesondere macht sich dies wiederum in Gläser-Geschirrspülmaschinen positiv bemerkbar.

Mit dieser zusätzlichen Modifikation kann somit ein Verfahren, beispielsweise ein Spülverfahren für Gläser-Geschirrspülmaschinen, zur Verfügung gestellt werden, das mit einem geringen bis verschwindenden Mehraufwand an Klarspülflüssigkeit, beispielsweise Frischwasser, ein deutlich verbessertes Nachspülergebnis, insbesondere hinsichtlich der sensorischen Anforderungen, erreicht als Reinigungsvorrichtungen mit Niedertemperatur-Klarspülung nach dem Stand der Technik.

In einer weiteren bevorzugten Ausführungsform des vorgeschlagenen Verfahrens wird eine Menge und/oder Konzentration des der ersten Klarspülflüssigkeit zudosierten Desinfektionsmittels erfasst. Beispielsweise kann eine Menge an Klarspülmittel mit Desinfektionskomponente, welche in die erste Klarspülflüssigkeit eindosiert wird, mittels mindestens eines Sensors erfasst werden. Auch eine unmittelbare Erfassung der Konzentration des Desinfektionsmittels, beispielsweise des Klarspülmittels mit Desinfektionskomponente, in der ersten Klarspülflüssigkeit ist möglich, beispielsweise mittels eines entsprechenden Sensors. Ein derartiger Sensor kann beispielsweise als Durchfluss-Sensor, als optischer Konzentrationssensor, als elektrischer Konzentrationssensor (beispielsweise als Leitfähigkeitssensor) oder als ähnliche Art von Sensor ausgestaltet sein. Auch Kombinationen von Sensoren sind möglich.

Die Reinigungsvorrichtung kann beispielsweise eine Steuerung umfassen. Entsprechend kann das Verfahren ausgestaltet sein, um bei einer Abweichung der Menge und/oder Konzentration von einem Sollwert und/oder Sollbereich ein Signal zu erzeugen. Bei diesem Signal kann es sich insbesondere um ein akustisches Signal, ein optisches Signal oder ein elektrisches Signal oder um eine Kombination der genannten Signalarten und/oder anderer Arten von Signale handeln. Auf diese Weise kann beispielsweise ein Benutzer von der aufgetretenen Abweichung informiert werden. Weiterhin kann, alternativ oder zusätzlich, auch eine entsprechend eingerichtete Regelung vorgesehen sein. Mittels dieser Regelung kann beispielsweise eine Einstellung vorgenommen werden, so dass die Menge und/oder Konzentration wieder auf den Sollwert und/oder Sollbereich eingestellt wird. Alternativ oder zusätzlich kann, beispielsweise, informiert durch das mindestens eine Signal, diese Einstellung jedoch auch grundsätzlich durch einen Bediener der Reinigungsvorrichtung vorgenommen werden.

Weitere bevorzugte Ausgestaltungen der Erfindung betreffen die Ausgestaltung der Reinigungsvorrichtung, wobei sich hieraus jedoch auch, wie oben dargestellt, entsprechende mögliche Ausgestaltungen des Verfahrens ergeben.

So kann die Reinigungsvorrichtung mit mindestens einer externen Umkehrosmoseanlage zusammenwirken, beispielsweise mit einer bauseitig vorgesehenen Umkehrosmoseanlage verbunden sein. Alternativ oder zusätzlich kann die Reinigungsvorrichtung jedoch auch mindestens eine Umkehrosmoseanlage als integralen Bestandteil umfassen. Diese Umkehrosmoseanlage kann beispielsweise eine kommerziell erhältliche Umkehrosmoseanlage sein und kann mit einer Frischwasserleitung, beispielsweise einer bauseitig vorgesehenen Frischwasserzuleitung, verbunden sein. Diese Umkehrosmoseanlage soll Permeat erzeugen, wobei die Reinigungsvorrichtung eingerichtet ist, um dieses für den zweiten Teilschritt zu verwenden.

Die Reinigungsvorrichtung kann weiterhin einen oder mehrere Zwischenspeicher zum Zwischenspeichern des Permeats und/oder eines bei der Umkehrosmose erzeugten Konzentrats umfassen. Dieser mindestens eine Zwischenspeicher kann separat ausgestaltet sein, kann aber auch ganz oder teilweise mit auch ganz oder teilweise mit einem oder mehreren Nachspültanks zusammengefasst sein, beispielsweise mit einem ersten Nachspültank zur Aufnahme der ersten Klarspülflüssigkeit und/oder mit einem zweiten Nachspültank zur Aufnahme der zweiten Klarspülflüssigkeit. So kann beispielsweise der erste Nachspültank als Zwischenspeicher für das Konzentrat eingesetzt werden.

Weiterhin kann die Reinigungsvorrichtung eine oder mehrere Heizvorrichtungen umfassen. So kann die Reinigungsvorrichtung insbesondere eine oder mehrere Heizvorrichtunggen zum Erwärmen der ersten Klarspülflüssigkeit, insbesondere des Konzentrats, aufweisen. Diese Heizvorrichtung kann auf unterschiedliche Weisen ausgestaltet sein, beispielsweise in Form eines Boilers. Auch andere Ausgestaltungen sind jedoch möglich.

Wie oben dargestellt, ist die Erfindung insbesondere für Reinigungsvorrichtungen im gewerblichen Spülbereich einsetzbar. So kann die Reinigungsvorrichtung insbesondere als Einkammer-Reinigungsvorrichtung ausgestaltet sein und kann eine Reinigungskammer umfassen und eingerichtet sein, um das Reinigungsgut in dieser Reinigungskammer dem Waschvorgang und dem Nachspülvorgang zu unterziehen. Wie oben dargestellt, sind jedoch grundsätzlich auch Anwendungen im Bereich der Mehrkammer-Reinigungsvorrichtungen denkbar.

Insbesondere für den Einsatz im gewerblichen Geschirrspülbereich in Großküchen ist es besonders bevorzugt, wenn die Reinigungsvorrichtung als Zweikreis-Reinigungsvorrichtung ausgestaltet ist. Dementsprechend kann die Reinigungsvorrichtung einen Waschkreislauf zur Durchführung des Waschvorgangs und einen von dem Waschkreislauf zumindest teilweise getrennten Nachspülkreislauf umfassen. Unter "zumindest teilweise getrennt" ist dabei zu verstehen, dass mindestens eine Komponente des Waschkreislaufs, insbesondere mindestens ein Tank, sich von dem Nachspülkreislauf unterscheidet. Auch mehrere Waschkreisläufe und/oder mehrere Nachspülkreisläufe können vorgesehen sein. Vorzugsweise umfasst der Waschkreislauf mindestens einen Waschtank, welcher beispielsweise auch als Bodenbereich der Reinigungskammer ausgestaltet sein kann. Der Nachspülkreislauf umfasst dementsprechend mindestens einen von dem Waschtank getrennten Nachspültank, welcher beispielsweise als Boiler ausgestaltet sein kann. Auch andere Arten der Ausgestaltung zumindest teilweiser getrennter Nachspülkreisläufe sind denkbar. Es können für den Waschkreislauf und für den Nachspülkreislauf unterschiedliche Düsensysteme eingesetzt werden, oder es können auch dieselben Düsen sowohl für den Waschvorgang als auch für den Nachspülvorgang eingesetzt werden.

Wie oben dargestellt, ist der Nachspülvorgang erfindungsgemäß zweigeteilt ausgestaltet, wobei sich an den ersten Teilschritt der zweite Teilschritt unter Verwendung des Umkehrosmose-Permeats anschließt. Um zeitliche Verzögerungen bei der Erzeugung des Permeats zu vermeiden, welche zu einer deutlichen Verlängerung des Nachspülvorgangs führen könnten, ist es besonders bevorzugt, wenn die Reinigungsvorrichtung einen Zwischenspeicher zum Speichern des bei der Umkehrosmose erzeugten Permeats aufweist. Alternativ oder zusätzlich könnte dieses Permeat jedoch auch in einem externen Zwischenspeicher, beispielsweise einem externen Zwischenspeicher einer externen Umkehrosmoseanlage, gespeichert werden.

Dieser Gedanke der Zwischenspeicherung des Permeats lässt sich besonders vorteilhaft mit einer weiteren vorteilhaften Ausgestaltung der Erfindung kombinieren, welche jedoch auch unabhängig realisierbar ist. So kann die Reinigungsvorrichtung eine Heizvorrichtung zum Erwärmen der zweiten Nachspülflüssigkeit, insbesondere des Permeats, umfassen. Diese Heizvorrichtung kann beispielsweise als Boiler ausgestaltet sein, wobei jedoch, alternativ oder zusätzlich, auch andere Heizvorrichtungen, wie beispielsweise Durchlauferhitzer, einsetzbar sind. Wird ein Boiler, beispielsweise ein druckloser oder druckbeaufschlagter Boiler, verwendet, so kann dieser Boiler gleichzeitig als Zwischenspeicher zum Zwischenspeichern des Permeats bzw. der zweiten Klarspülflüssigkeit eingesetzt werden. In diesem Boiler kann die zweite Klarspülflüssigkeit bereits aufgeheizt werden, beispielsweise während der erste Teilschritt des Nachspülvorgangs läuft. Auf diese Weise kann sich beispielsweise ohne Zeitverzögerung an den ersten Teilschritt der zweite Teilschritt anschließen. Auch andere Ausgestaltungen sind jedoch grundsätzlich denkbar, beispielsweise Ausgestaltungen, bei welchen ein und derselbe Boiler sequentiell für die erste Klarspülflüssigkeit und die zweite Klarspülflüssigkeit verwendet wird. Bevorzugt sind jedoch getrennte Tanks für diese mindestens zwei Klarspülflüssigkeiten.

### Ausführungsformen der Erfindung

Weitere mögliche Details und Ausgestaltungen der Erfindung ergeben sich aus der nachfolgenden Beschreibung bevorzugter Ausführungsbeispiele, in Kombination mit den Unteransprüchen. Die einzelnen Merkmale können dabei wiederum einzeln oder in Kombination realisiert werden. Die Ausführungsbeispiele sind in den Figuren schematisch dargestellt. Gleiche Bezugsziffern in den einzelnen Figuren bezeichnen dabei gleiche oder funktionsgleiche bzw. hinsichtlich ihrer Funktionen einander entsprechende Elemente. Die Erfindung ist nicht auf die Ausführungsbeispiele beschränkt.

Im Einzelnen zeigt:
- Figur 1: eine schematische Darstellung eines Programmablaufs einer Geschirrspülmaschine mit herkömmlicher Niedertemperatur-Nachspülung;
- Figur 2: eine schematische Darstellung eines Programmablaufs einer Geschirrspülmaschine mit erfindungsgemäßer Niedertemperatur-Nachspülung; und
- Figur 3: eine schematische Darstellung einer möglichen Ausführungsform einer erfindungsgemäßen Reinigungsvorrichtung.

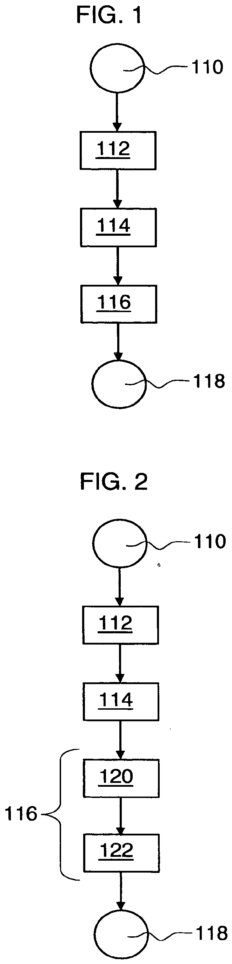

In Figur 1 ist ein schematischer Ablaufplan eines herkömmlichen Verfahrens zum Reinigen von Reinigungsgut dargestellt. Das Verfahren entspricht einem Programmablauf mit herkömmlicher Niedertemperatur-Klarspülung.

In Verfahrungsschritt 110 startet das Spülprogramm, beispielsweise indem ein Bediener nach Beladen einer Reinigungskammer eine Start-Taste betätigt. Auch ein automatischer Programmstart 110 ist grundsätzlich möglich.

In einem sich anschließenden Verfahrensschritt 112 wird ein Waschvorgang durchgeführt, welcher auch als Reinigungsvorgang bezeichnet wird. Während dieses Waschvorgangs 112 erfolgt eine Reinigung des Reinigungsguts, beispielsweise durch ein Umwälzen von Waschflüssigkeit (auch als Spülflüssigkeit oder Waschlauge bezeichnet), welche beispielsweise in einem Waschtank bevorratet sein kann. Beispielsweise kann dieser Waschtank als Bodenbereich der Reinigungskammer ausgestaltet sein.

Anschließend erfolgt optional in Schritt 114 eine Abtropfphase, während der Waschflüssigkeit vom Reinigungsgut abtropfen kann.

An die Abtropfphase 114 schließt sich in Schritt 116 gemäß Figur 1 ein Nachspülvorgang 116 an. In diesem Nachspülvorgang 116 wird das im Waschvorgang 112 gereinigte Reinigungsgut mit Klarspülflüssigkeit nachgespült bzw. klargespült, bevor mit Verfahrensschritt 118 das Ende des Reinigungsprogramms erreicht ist. Das Ende kann beispielsweise automatisch herbeigeführt werden und kann beispielsweise in einer Anzeige, beispielsweise einer Klartext-Anzeige und/oder mittels einer Leuchte und/oder mittels eines akustischen Signals für einen Benutzer dargestellt werden.

In dem Nachspülvorgang 116 wird bei dem dargestellten Niedertemperatur-Klarspülen üblicherweise Frischwasser auf eine Temperatur von beispielsweise 49°C aufgeheizt. Um die erforderliche Hygiene-Wirkung am Reinigungsgut zu erreichen, wird der Klarspülflüssigkeit ein Klarspülmittel beigegeben, welches in der Regel Desinfektionsmittel auf Chlorbasis enthält. Diese Anreicherung erfolgt beispielsweise mittels eines Dosiergeräts, welches in der Geschirrspülmaschine eingebaut ist oder welches als separate Baueinheit ausgestaltet sein kann und mit einer Steuerung der Geschirrspülmaschine in Wirkverbindung stehen kann. Solche Klarspülmittel mit Desinfektionsmitteln, welche auch als "Sanitizer" bezeichnet werden, sind beispielsweise für die USA im NSF3-Standard aufgeführt. Dort sind auch die Konzentrationen vorgeschrieben, die für einen ordnungsgemäßen Betrieb einzuhalten sind. Um die hygienischen Anforderungen und auch die Anforderungen an den Verbraucherschutz zu erfüllen, dürfen beispielsweise in den USA nur Mittel zum Einsatz kommen, welche diesem Standard entsprechen.

Trotz der Vorschriften des NSF3-Standards hinterlassen diese Klarspülmittel mit Desinfektionsmitteln auf dem Reinigungsgut, beispielsweise Trinkgläsern, am Programmende 118 Rückstände, welche häufig stark nach Chlor riechen. Diese sensorische Auffälligkeit ist so stark ausgeprägt und dauerhaft, dass Getränke, welche später in diesen Gläsern dargereicht werden, in ihrem Geruch und Geschmack massiv negativ beeinflusst sind.

In der Darstellung gemäß Figur 2 ist demgegenüber ein schematischer Ablaufplan eines erfindungsgemäßen Ablaufs zum Reinigen von Reinigungsgut dargestellt. Auch dieses Verfahren wird im Folgenden beispielhaft am Beispiel eines Programms zum Reinigen von Geschirr in einer Geschirrspülmaschine erläutert. Die dargestellten Verfahrensschritte werden vorzugsweise in der dargestellten Reihenfolge durchgeführt, wobei jedoch grundsätzlich auch andere Reihenfolgen möglich sind. Weiterhin ist es möglich zusätzliche, in Figur 2 nicht dargestellte Verfahrensschritte durchzuführen. Weiterhin ist es auch möglich, dass einzelne oder auch mehrere Verfahrensschritte zeitlich parallel, zeitlich überlappend oder wiederholt durchgeführt werden. Auch eine Aufteilung einzelner Verfahrensschritte in mehrere Teilschritte ist denkbar.

Wiederum startet das erfindungsgemäße Verfahren mit Niedertemperatur-Klarspülung in Schritt 110. Beispielsweise kann dies wiederum dadurch erfolgen, dass ein Bediener der Geschirrspülmaschine nach Beladen der Reinigungskammer eine Start-Taste betätigt.

Anschließend erfolgt wiederum in Schritt 112 die Reinigung des Reinigungsguts in einem Waschvorgang. Hierbei wird in der Regel wiederum Spülflüssigkeit bzw. Waschflüssigkeit, welche bereits in einem Waschtank bevorratet ist, umgewälzt. Auch eine Aufteilung des Waschvorgangs 112 in mehrere Teilschritte ist denkbar, beispielsweise in eine Grobreinigung, gefolgt vom eigentlichen Waschvorgang. Verschiedene Ausgestaltungen sind möglich.

In Verfahrensschritt 114 wird wiederum optional eine Abtropfphase durchgeführt, um ein Abtropfen der Waschflüssigkeit vom Reinigungsgut zu ermöglichen. Anschließend wird ein Nachspülvorgang 116 durchgeführt. Im Gegensatz zum herkömmlichen Verfahren gemäß Figur 1 ist dieser Nachspülvorgang 116 zweigeteilt.

So wird in einem ersten Teilschritt 120 das in Waschvorgang 112 gereinigte Reinigungsgut mit einer ersten Klarspülflüssigkeit beaufschlagt und klar gespült. Diese erste Klarspülflüssigkeit kann beispielsweise Frischwasser sein und wird vorzugsweise wie beim konventionellen Niedertemperatur-Klarspülen gemäß Figur 1 auf eine Temperatur von beispielsweise 49°C aufgeheizt. Um die erforderliche Hygiene-Wirkung am Spülgut zu erreichen, enthält diese erste Klarspülflüssigkeit wiederum ein Desinfektionsmittel, beispielsweise ein Desinfektionsmittel auf Chlorbasis. Wie oben dargestellt, kann dieses Desinfektionsmittel beispielsweise Bestandteil eines Klarspülmittels mit Desinfektionsmittelzusatz sein. Dieses Desinfektionsmittel wird der ersten Klarspülflüssigkeit, beispielsweise dem Frischwasser, beigegeben. Die Anreicherung kann beispielsweise wiederum mittels eines Dosiergeräts erfolgen, das in der Geschirrspülmaschine eingebaut ist oder als separate Baueinheit ausgestaltet sein kann, und welches beispielsweise mit einer Steuerung der Geschirrspülmaschine in Wirkverbindung stehen kann.

Anschließend an den ersten Teilschritt 120 wird ein zweiter Teilschritt 122 des Nachspülvorgangs 116 durchgeführt. In diesem zweiten Teilschritt 122 wird das Reinigungsgut mit einer zweiten Klarspülflüssigkeit beaufschlagt, welche mindestens ein, mittels einer Umkehrosmose erzeugtes, Permeat umfasst. Beispielsweise kann es sich hierbei um gänzlich unbehandeltes Permeat aus einer Umkehrosmoseanlage handeln, vorzugsweise Reinstwasser.

Dieses Permeat ist prinzipbedingt sehr rein und in der Regel auch keimfrei, da es vorzugsweise nicht für eine längere Zeit in irgendeinem Behälter bevorratet wird, sondern bedarfsgerecht für den jeweiligen Nachspülvorgang beziehungsweise den zweiten Teilschritt 122 erzeugt werden kann. Um den Trocknungseffekt des Reinigungsguts zu verbessern, kann dieses Permeat beziehungsweise diese zweite Klarspülflüssigkeit beispielsweise in einem Boiler oder mittels eines Durchlauferhitzers aufgeheizt werden, bevor diese zweite Klarspülflüssigkeit auf das Reinigungsgut aufgegeben, beispielsweise über dieses versprüht, wird.

Die für den zweiten Teilschritt 122 erforderlichen Umkehrosmoseanlagen sind an sich aus dem Stand der Technik bekannt. Mit derartigen Umkehrosmoseanlagen lässt sich beispielsweise Leitungswasser, unabhängig von den bauseitigen Gegebenheiten, derart aufbereiten, das heißt, von nahezu allen schwebenden aber auch gelösten Bestandteilen befreien, so dass ein Leitwert von beispielsweise weniger als 80 µS im Permeat erreicht wird. Wasser, welches einen derart geringen Leitwert aufweist, hinterlässt beim Abtrocknen bzw. Verdampfen keinerlei sichtbare Rückstände.

Anschließend kann in Verfahrensschritt 118 das Reinigungsprogramm beendet werden, beispielsweise analog zum oben beschriebenen Verfahren gemäß Figur 1.

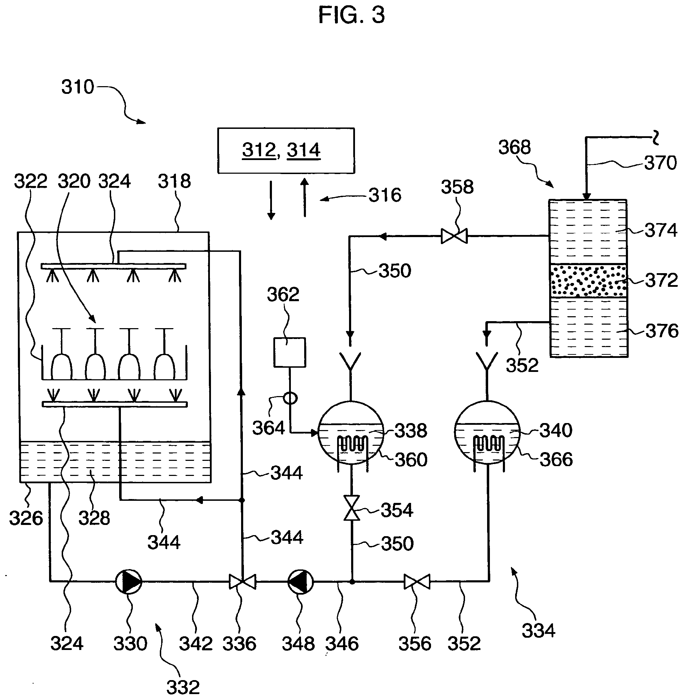

In Figur 3 ist ein mögliches Ausführungsbeispiel einer erfindungsgemäßen Reinigungsvorrichtung 310 schematisch dargestellt. Diese Reinigungsvorrichtung 310 kann beispielsweise eine Steuerung 312 umfassen, welche beispielsweise eingerichtet sein kann, um auf der Reinigungsvorrichtung 310 ein Verfahren gemäß der Erfindung durchzuführen, beispielsweise ein Verfahren gemäß dem in Figur 2 beschriebenen Ausführungsbeispiel. Die Steuerung 312 kann auch eine Regelung 314 umfassen, um verschiedene Vorgänge in der Reinigungsvorrichtung 310 zu regeln. Die Steuerung 312 kann beispielsweise ganz oder teilweise als Datenverarbeitungsvorrichtung ausgestaltet sein, so dass ein Reinigungsprogramm beispielsweise programmtechnisch in dieser Steuerung 312 implementiert sein kann. Auch andere elektronische und/oder mechanische Komponenten können in der Steuerung 312 enthalten sein. Die Steuerung 312 kann als zentrale oder als dezentrale Steuerung ausgestaltet sein und kann beispielsweise mittels einer oder mehrerer in Figur 3 symbolisch mit der Bezugsziffer 316 bezeichneten Schnittstellen mit sonstigen Komponenten der Reinigungsvorrichtung 312 in Verbindung stehen.

Die Reinigungsvorrichtung 310 ist in dem dargestellten Ausführungsbeispiel als Geschirrspülmaschine ausgestaltet und umfasst eine Reinigungskammer 318. Vorzugsweise handelt es sich bei der Reinigungsvorrichtung 310 um eine Einkammer-Geschirrspülmaschine, in welcher Reinigungsgut 320 beispielsweise ortsfest, z.B. mittels eines oder mehrerer Geschirrkörbe 322, in die Reinigungskammer 318 eingebracht ist. In dieser Reinigungskammer 318 kann dieses Reinigungsgut 320, welches im vorliegenden Ausführungsbeispiel in Form von Gläsern dargestellt ist, beispielsweise mittels eines Sprühsystems 324 mit Reinigungsflüssigkeit oder Klarspülflüssigkeit beaufschlagt werden. Dabei ist in dem Ausführungsbeispiel gemäß Figur 3 ein einziges Sprühsystem 324 vorgesehen. Auch Ausgestaltungen mit mehreren Sprühsystemen 324 sind jedoch grundsätzlich möglich, beispielsweise getrennte Sprühsysteme 324 für einen Waschvorgang und einen Nachspülvorgang.

Der untere Bereich der Reinigungskammer 318 ist als Waschtank 326 ausgestaltet. Aus diesem Waschtank 326 wird für den in Figur 2 beschriebenen Waschvorgang 112 Waschflüssigkeit 328 über eine Umwälzpumpe 330 enthaltenden Waschkreislauf 332 umgewälzt. Dabei wird die Waschflüssigkeit 328 mehrfach über das Sprühsystem 324 auf das Reinigungsgut 320 aufgesprüht, tropft von diesem wieder in den Waschtank 326 um erneut mittels der Umwälzpumpe 330 und dem Sprühsystem 324 aufgesprüht zu werden. Die Reinigungsvorrichtung 310 kann zusätzliche, in Figur 3 nicht dargestellte Komponenten umfassen, beispielsweise einen oder mehrere Filter und/oder Ventile, welche diesen Umwälzvorgang steuern und/oder unterstützen können.

Weiterhin umfasst die Reinigungsvorrichtung 310 in dem in Figur 3 dargestellten Ausführungsbeispiel einen von dem Waschkreislauf 332 getrennten Nachspülkreislauf 334. Mittels eines, beispielsweise durch die Steuerung 312 angesteuerten, Umschaltventils 336 kann das Sprühsystem 324 in diesen Nachspülkreislauf 334 eingebunden werden. Dabei erfolgt vorzugsweise lediglich eine einfache Beaufschlagung des Reinigungsguts 320 mit Klarspülflüssigkeiten 338, 340. Der Begriff "Nachspülkreislauf" impliziert also nicht notwendigerweise ein Umwälzen der Klarspülflüssigkeiten 338, 340, sondern auch eine einfache Beaufschlagung des Reinigungsguts 320 mit diesen Klarspülflüssigkeiten 338, 340 ist möglich. Die Klarspülflüssigkeiten 338, 340 können nach der Beaufschlagung des Reinigungsguts 320 beispielsweise in den Waschtank 326 abtropfen, so dass die Waschflüssigkeit 328 durch diese Klarspülflüssigkeiten 338, 340 aufbereitet wird.

Während der Waschtank 326 in dem in Figur 3 dargestellten Ausführungsbeispiel über eine, die Umwälzpumpe 330 umfassende, Waschleitung 342 mit dem Umschaltventil 336 verbunden ist, welches wiederum über die Sprühleitung 344 mit dem Sprühsystem 324 verbunden ist, ist das Umschaltventil 336 an seiner der Waschleitung 342 gegenüberliegenden Seite mit einer Nachspülleitung 346 verbunden. In dieser Nachspülleitung 346 kann optional eine Drucksteigerungspumpe 348 aufgenommen sein, welche jedoch auch beispielsweise in den Sprühleitungen 344 aufgenommen sein kann. Alternativ kann auch eine unmittelbare Druckbeaufschlagung der Klarspülflüssigkeiten 338, 340 erfolgen, beispielsweise mittels des bauseitigen Leitungsdrucks.

Die Nachspülleitung 346 teilt sich in eine erste Nachspülleitung 350 und eine zweite Nachspülleitung 352. Optional können in diesen Nachspülleitungen 350, 352, wie auch in der Nachspülleitung 346 und in den sonstigen in Figur 3 dargestellten Leitungen weitere Ventile 354, 356, 358 vorgesehen sein, welche beispielsweise für die Steuerung des Nachspülvorgangs eingesetzt werden können. Verschiedene Ausgestaltungen sind denkbar.

Zur Durchführung des oben beschriebenen ersten Teilschritts 120 des Nachspülvorgangs 116 umfasst die Reinigungsvorrichtung 310 gemäß Figur 3 einen ersten Nachspültank 360, welcher über die erste Nachspülleitung 350 und die Nachspülleitung 346 mit dem Umschaltventil 336 verbunden ist. Dieser erste Nachspültank 360, welcher beispielsweise als Boiler ausgestaltet sein kann oder eine andere Art von Heizvorrichtung umfassen kann beziehungsweise mit einer anderen Art von Heizvorrichtung verbunden sein kann, nimmt die erste Klarspülflüssigkeit 338 auf. Beispielsweise kann es sich bei dieser ersten Klarspülflüssigkeit 338, wie oben dargestellt, um Wasser handeln. Mittels einer Dosiervorrichtung 362 kann dieser ersten Klarspülflüssigkeit 338 ein Desinfektionsmittel beigemischt werden, beispielsweise ein Klarspülmittel mit Desinfektionsmittelkomponente. Diese Dosierung kann beispielsweise mittels eines Sensors 364 überwacht werden, beispielsweise mittels eines Durchflusssensors. Auf diese Weise kann die Konzentration des Desinfektionsmittels in der ersten Klarspülflüssigkeit 338 überwacht werden.

Es sei darauf hingewiesen, dass die Verwendung des ersten Nachspültanks 360 gemäß Figur 3 optional ist. Auch eine unmittelbare Eindosierung des Desinfektionsmittels, beispielsweise in über eine Frischwasserleitung zugeführtes Leitungswasser, ist denkbar. So könnte beispielsweise mittels eines Durchlauferhitzers unmittelbar eine Erwärmung des zugeführten Frischwassers als erste Klarspülflüssigkeit 338 erfolgen, beispielsweise (wie auch im Falle der Verwendung eines Boilers) auf eine Temperatur von 49°C. Anschließend oder vorher kann die Beimischung des Desinfektionsmittels erfolgen. Auch andere Arten der Beimischung des Desinfektionsmittels sind grundsätzlich denkbar. Die Dosierung, beispielsweise mittels der Signale des Sensors 364, kann beispielsweise von der Steuerung 312 beziehungsweise der Regelung 314 gesteuert und/oder geregelt werden.

Weiterhin umfasst der Nachspülkreislauf 334 in dem in Figur 3 dargestellten Ausführungsbeispiel optional einen zweiten Nachspültank 366, welcher ebenfalls wiederum als Boiler dargestellt ist. Wiederum ist auch hier jedoch eine andere Ausgestaltung möglich, beispielsweise eine Ausgestaltung ohne zweiten Nachspültank 366, bei welchem unmittelbar durch die zweite Nachspülleitung 352 strömende zweite Klarspülflüssigkeit 340 verwendet wird, anstelle einer Bevorratung bei dieser zweiten Klarspülflüssigkeit 340 in dem zweiten Nachspültank 366.

Der zweite Nachspültank 366 ist mit einer Umkehrosmoseanlage 368 verbunden. Diese Umkehrosmoseanlage 368 kann integraler Bestandteil der Reinigungsvorrichtung 310 sein, kann jedoch auch als externe Umkehrosmoseanlage 368 ausgestaltet werden.

Die Umkehrosmoseanlage 368 ist mit einer Frischwasserleitung 370 verbunden und ist in Figur 3 lediglich symbolisch angedeutet. Sie verfügt über eine Membran 372, welche ein Konzentrat 374 von einem Permeat 376 trennt. Die Membran 372 ist als semipermeable Membran ausgestaltet und beispielsweise durchlässig gegenüber Wassermolekülen, wohingegen Verunreinigungen, wie beispielsweise mineralische Verunreinigungen, organische Verunreinigungen oder biologische Verunreinigungen, zurückgehalten werden. Wie oben dargestellt, wird das Frischwasser auf der Konzentrat-Seite mit einem Druck beaufschlagt, welche höher ist als der osmotische Druck. Hierdurch werden Wassermoleküle durch die semipermeable Membran 372 gepresst, wohingegen Verunreinigungen auf der Seite des Konzentrats 374 zurückbleiben. Hierdurch bildet sich ein dem von außen angelegten Druck entgegenwirkender osmotischer Druck aus. Sobald sich der angelegte Druck und der osmotische Druck die Waage halten, stellt sich ein Gleichgewicht ein, bzw. so lange der von außen angelegte Druck höher als der Druck auf der Permeatseite 376 ist, werden Wassermoleküle zur Permeatseite hin verschoben.

Das Permeat 376, welches in diesem Fall Reinstwasser ist, wird als zweite Klarspülflüssigkeit 340 verwendet. Zu diesem Zweck kann die Seite des Permeats 376 der Umkehrosmoseanlage 368 beispielsweise über die zweite Nachspülleitung 352 mit dem zweiten Nachspültank 366 verbunden sein, um dort eine Erwärmung durchzuführen. Auch eine unmittelbare Verwendung der Permeatseite 376 der Umkehrosmoseanlage 368 als Vorratstank für die Bevorratung der zweiten Klarspülflüssigkeit 340 ist denkbar, wobei beispielsweise anschließend eine Erwärmung der zweiten Klarspülflüssigkeit 340 mittels eines Durchlauferhitzers erfolgen kann. Insofern ist die Ausgestaltung mit einem zusätzlichen zweiten Nachspültank 366 gemäß Figur 3 nicht unbedingt erforderlich.

Wie in Figur 3 dargestellt, kann die Konzentrat-Seite der Umkehrosmoseanlage 368 beispielsweise über die erste Nachspülleitung 350 mit den ersten Nachspültank 360 verbunden werden, so dass das Konzentrat 374 als Bestandteil der ersten Klarspülflüssigkeit 338 verwendet werden kann. Zusätzlich kann, was in Figur 3 nicht dargestellt ist, der erste Nachspültank 360 auch mit einer weiteren Frischwasserleitung 370 verbunden sein. Auf diese Weise kann das Konzentrat 374 zusätzlich mit Frischwasser gemischt werden. Durch die Verwendung des Konzentrats 374 als Bestandteil der ersten Klarspülflüssigkeit 338 lässt sich der Einsatz an Frischwasser stark verringern.

Für die mögliche Betriebsweise der Reinigungsvorrichtung 310 gemäß Figur 3 kann weitgehend auf die Beschreibung der Figur 2 verwiesen werden. Für die Durchführung des Waschvorgangs 112 wird der Waschkreislauf 332 eingesetzt. Während der Durchführung des Waschvorgangs kann beispielsweise in dem ersten Nachspültank 360 bereits die erste Klarspülflüssigkeit 338 aufbereitet werden, also beispielsweise durch Erwärmen und/oder durch Beimengen des Desinfektionsmittels. Weiterhin kann, zeitlich parallel oder zeitlich versetzt, auch eine Aufbereitung des Permeats 376 in der Umkehrosmoseanlage 368 erfolgen, optional gefolgt von einer Erwärmung in dem optionalen zweiten Nachspültank 366. Auch eine alleinige Bevorratung des Permeats 376 in der Umkehrosmoseanlage 368 ist jedoch denkbar.

Nach Beendigung des Waschvorgangs wird, durch Umschalten des Umschaltventils 336 und gegebenenfalls durch Starten der Drucksteigerungspumpe 348 (auch andere Ausgestaltungen sind denkbar, beispielsweise Ausgestaltungen ausschließlich mit der Drucksteigerungspumpe 348 und ohne Umschaltventil 336, oder Ausgestaltungen die auf die Ventile 336, 354 und 356 verzichten und dafür zusätzlich im Zweig 350 und 352 jeweils eine Drucksteigerungspumpe benutzen.) der Nachspülvorgang gestartet. Dabei kann, zur Durchführung des ersten Teilschritts, beispielsweise zunächst lediglich das Ventil 354 geöffnet sein, wohingegen das Ventil 356 geschlossen ist. Hierdurch wird die erste Klarspülflüssigkeit 338 aus dem ersten Nachspültank 360 mittels der Drucksteigerungspumpe 348 zum Sprühsystem 324 gepumpt, um die anhaftende Waschflüssigkeit vom Reinigungsgut 320 abzuspülen. Nach Beendigung des ersten Teilschritts kann dann beispielsweise das Ventil 354 geschlossen werden, um das Ventil 356 zu öffnen. Dann wird im zweiten Teilschritt des Nachspülvorgangs Permeat 376, vorzugsweise ohne Beimengung zusätzlicher Komponenten, auf das Reinigungsgut 320 aufgesprüht, in dem dieses über die Drucksteigerungspumpe 348 zu dem Sprühsystem 324 gepumpt wird.

### Bezugszeichenliste

| | | | |
|---|---|---|---|
| 110 | Programmstart | 364 | Sensor |
| 112 | Waschvorgang | 366 | zweiter Nachspültank |
| 114 | Abtropfphase | 368 | Umkehrosmoseanlage |
| 116 | Nachspülvorgang | 370 | Frischwasserleitung |
| 118 | Programmende | 372 | Membran |
| 120 | erster Teilschritt | 374 | Konzentrat |
| 122 | zweiter Teilschritt | 376 | Permeat |
| 310 | Reinigungsvorrichtung | | |
| 312 | Steuerung | | |
| 314 | Regelung | | |
| 316 | Schnittstelle | | |
| 318 | Reinigungskammer | | |
| 320 | Reinigungsgut | | |
| 322 | Geschirrkorb | | |
| 324 | Sprühsystem | | |
| 326 | Waschtank | | |
| 328 | Waschflüssigkeit | | |
| 330 | Umwälzpumpe | | |
| 332 | Waschkreislauf | | |
| 334 | Nachspülkreislauf | | |
| 336 | Umschaltventil | | |
| 338 | erste Klarspülflüssigkeit | | |
| 340 | zweite Klarspülflüssigkeit | | |
| 342 | Waschleitung | | |
| 344 | Sprühleitungen | | |
| 346 | Nachspülleitung | | |
| 348 | Drucksteigerungspumpe | | |
| 350 | erste Nachspülleitung | | |
| 352 | zweite Nachspülleitung | | |
| 354 | Ventil | | |
| 356 | Ventil | | |
| 358 | Ventil | | |
| 360 | erster Nachspültank | | |
| 362 | Dosiervorrichtung | | |

## Patentansprüche

1. Verfahren zur Behandlung von Reinigungsgut (320), insbesondere Geschirr, wobei das Reinigungsgut (320) mindestens einem Waschvorgang unterzogen wird, wobei anhaftender Schmutz zumindest weitgehend entfernt wird, wobei das Reinigungsgut (320) anschließend einem Nachspülvorgang unterzogen wird, wobei der Nachspülvorgang mindestens zwei Teilschritte aufweist, wobei in einem ersten Teilschritt das Reinigungsgut (320) mit einer ersten Klarspülflüssigkeit (338) beaufschlagt wird, wobei die erste Klarspülflüssigkeit (338) ein Desinfektionsmittel enthält, wobei in einem anschließenden zweiten Teilschritt das Reinigungsgut (320) mit einer zweiten Klarspülflüssigkeit (340) beaufschlagt wird, wobei die zweite Klarspülflüssigkeit (340) mindestens ein mittels einer Umkehrosmose erzeugtes Permeat (376) umfasst, wobei die erste Klarspülflüssigkeit (338) ein bei der Umkehrosmose anfallendes Konzentrat (374) enthält und wobei der erste Teilschritt bei einer Temperatur der ersten Klarspülflüssigkeit (338) durchgeführt wird, welche zwischen 24°C und 90°C, insbesondere bei 49°C liegt, wobei der mindestens eine Waschvorgang in einer als Zweikreis-Reinigungsvorrichtung mit einem Waschkreislauf (332) zur Durchführung des Waschvorgangs und einem von dem Waschkreislauf (332) zumindest teilweise getrennten Nachspülkreislauf(334) durchgeführt wird.

2. Verfahren nach dem vorhergehenden Anspruch, wobei die zweite Klarspülflüssigkeit (340) im Wesentlichen frei ist von Klarspülerzusätzen.

3. Verfahren nach einem der vorhergehenden Ansprüche, wobei die zweite Klarspülflüssigkeit (340) auf eine Temperatur zwischen 24 °C und 90 °C, insbesondere auf 49°C erwärmt wird.

4. Verfahren nach einem der vorhergehenden Ansprüche, wobei eine Menge und/oder Konzentration des der ersten Klarspülflüssigkeit (338) zudosierten Desinfektionsmittels erfasst wird.

5. Verfahren nach dem vorhergehenden Anspruch, wobei bei einer Abweichung der Menge und/oder Konzentration von einem Sollwert und/oder Sollbereich ein Signal, insbesondere ein akustisches Signal, ein optisches Signal oder ein elektrisches Signal, ausgegeben wird.

6. Reinigungsvorrichtung (310) zum gewerblichen Reinigen von Reinigungsgut (320), unter Verwendung eines Verfahrens nach einem der Ansprüche 1 bis 5, wobei die Reinigungsvorrichtung (310) eingerichtet ist, um das Reinigungsgut (320) mindestens einem Waschvorgang zu unterziehen, in welchem anhaftender Schmutz zumindest weitgehend entfernt wird, wobei die Reinigungsvorrichtung (310) weiterhin eingerichtet ist, um das Reinigungsgut (320) anschließend einem Nachspülvorgang zu unterziehen, **dadurch gekennzeichnet, dass** der Nachspülvorgang mindestens zwei Teilschritte aufweist, wobei in einem ersten Teilschritt das Reinigungsgut (320) mit einer ersten Klarspülflüssigkeit (338) beaufschlagt wird, wobei die erste Klarspülflüssigkeit (338) ein Desinfektionsmittel enthält, wobei in einem anschließenden zweiten Teilschritt das Reinigungsgut mit einer zweiten Klarspülflüssigkeit (340) beaufschlagt wird, wobei die zweite Klarspülflüssigkeit (340) mindestens ein mittels einer Umkehrosmose erzeugtes Permeat (376) umfasst, wobei die Reinigungsvorrichtung (310) eingerichtet ist, um ein bei der Umkehrosmose anfallendes Konzentrat für den ersten Teilschritt des Nachspülvorgangs zu verwenden und wobei die Reinigungsvorrichtung (310) eine Heizvorrichtung, insbesondere einen Boiler, zum Erwärmen der ersten Klarspülflüssigkeit (338), insbesondere des Konzentrats (374), aufweist und die Reinigungsvorrichtung (310) ferner als Zweikreis-Reinigungsvorrichtung ausgestaltet ist und einen Waschkreislauf (332) zur Durchführung des Waschvorgangs und einen von dem Waschkreislauf (332) zumindest teilweise getrennten Nachspülkreislauf (334) umfasst.

7. Reinigungsvorrichtung (310) nach dem vorhergehenden Anspruch, wobei die Reinigungsvorrichtung (310) eine Umkehrosmoseanlage (368) umfasst und eingerichtet ist, um ein von der Umkehrosmoseanlage (368) erzeugtes Permeat (376) für den zweiten Teilschritt zu verwenden.

8. Reinigungsvorrichtung (310) nach einem der beiden vorhergehenden Ansprüche, wobei die Reinigungsvorrichtung (310) als Einkammer-Reinigungsvorrichtung ausgestaltet ist, wobei die Reinigungsvorrichtung (310) eine Reinigungskammer (318) umfasst und eingerichtet ist, um das Reinigungsgut (320) in dieser Reinigungskammer (318) dem Waschvorgang und dem Nachspülvorgang zu unterziehen.

9. Reinigungsvorrichtung (310) nach einem der vorhergehenden, eine Reinigungsvorrichtung (310) betreffenden Ansprüche, wobei die Reinigungsvorrichtung (310) mindestens einen Sensor (364) zur Erfassung einer Menge und/oder Konzentration des der ersten Klarspülflüssigkeit (338) zudosierten Desinfektionsmittels umfasst, wobei die Reinigungsvorrichtung (310) weiterhin mindestens eine Steuerung (312) und/oder Regelung (314) umfasst, wobei die Steuerung (312) und/oder Regelung (314) eingerichtet ist, um bei einer Abweichung der Menge und/oder Konzentration von einem Sollwert und/oder Sollbereich ein Signal zu erzeugen, insbesondere ein akustisches Signal, ein optisches Signal oder ein elektrisches Signal.

10. Reinigungsvorrichtung (310) nach einem der vorhergehenden, eine Reinigungsvorrichtung (310) betreffenden Ansprüche, wobei die Reinigungsvorrichtung (310) weiterhin einen Zwischenspeicher (360) zum Speichern eines bei der Umkehrosmose erzeugten Konzentrats (374) umfasst.

11. Reinigungsvorrichtung (310) nach einem der vorhergehenden, eine Reinigungsvorrichtung (310) betreffenden Ansprüche, wobei die Reinigungsvorrichtung (310) einen Zwischenspeicher (366) zum Speichern des Permeats (376) umfasst.

12. Reinigungsvorrichtung (310) nach einem der vorhergehenden, eine Reinigungsvorrichtung (310) betreffenden Ansprüche, wobei die Reinigungsvorrichtung (310) eine Heizvorrichtung, insbesondere einen Boiler, zum Erwärmen der zweiten KlarSpülflüssigkeit (340), insbesondere des Permeats (376) aufweist.

## Claims

1. Method for treating washware (320), in particular dishes, with the washware (320) being subjected to at least one washing process, with adhering dirt being at least largely removed, with the washware (320) then being subjected to a final-washing process, with the final-washing process having at least two substeps, with the washware (320) being acted on by a first rinse liquid (338) in a first substep, with the first rinse liquid (338) containing a disinfectant, with the washware (320) being acted on by a second rinse liquid (340) in a subsequent second substep, with the second rinse liquid (340) comprising at least one permeate (376) which is produced by means of reverse osmosis, with the first rinse liquid (338) containing a concentrate (374) which is produced during reverse osmosis and with the first substep being carried out with the first rinse liquid (338) at a temperature of between 24°C and 90°C, in particular 49°C, with the at least one wash process being carried out in a in the form of a two-circuit cleaning apparatus comprising a wash circuit (332) for carrying out the wash process and a final-washing circuit (334) which is at least partly separate from the wash circuit (332).

2. Method according to the preceding claim, with the second rinse liquid (340) being substantially free of rinse-aid additives.

3. Method according to either of the preceding claims, with the second rinse liquid (340) being heated to a temperature of between 24°C and 90°C, in particular to 49°C.

4. Method according to one of the preceding claims, with a quantity and/or concentration of the disinfectant which is added in metered manner to the first rinse liquid (338) being detected.

5. Method according to the preceding claim, with a signal, in particular an acoustic signal, an optical signal or an electrical signal, being output when the quantity and/or concentration deviate/deviates from a desired value and/or desired range.

6. Cleaning apparatus (310) for commercially cleaning washware (320), using a method according to one of Claims 1 to 5, with the cleaning apparatus (310) being designed to subject the washware (320) to at least one wash process in which adhering dirt is at least largely removed, with the cleaning apparatus (310) further being designed to then subject the washware (320) to a final-washing process, **characterized in that** the final-washing process has at least two substeps, with the washware (320) being acted on by a first rinse liquid (338) in a first substep, with the first rinse liquid (338) containing a disinfectant, with the washware being acted on by a second rinse liquid (340) in a subsequent second substep, with the second rinse liquid (340) comprising at least one permeate (376) which is produced by means of reverse osmosis, with the cleaning apparatus (310) being designed to use a concentrate, which is produced during reverse osmosis, for the first substep of the final-washing process and with the cleaning apparatus (310) having a heating apparatus, in particular a boiler, for heating the first rinse liquid (338), in particular the concentrate (374), and the cleaning apparatus (310) further being in the form of a two-circuit cleaning apparatus and comprising a wash circuit (332) for carrying out the wash process and a final-washing circuit (334) which is at least partly separate from the wash circuit (332).

7. Cleaning apparatus (310) according to the preceding claim, with the cleaning apparatus (310) comprising a reverse-osmosis system (368) and being designed to use a permeate (376), which is produced by the reverse-osmosis system (368), for the second substep.

8. Cleaning apparatus (310) according to one of the two preceding claims, with the cleaning apparatus (310) being in the form of a single-chamber cleaning apparatus, with the cleaning apparatus (310) comprising a cleaning chamber (318) and being designed to subject the washware (320) in this cleaning chamber (318) to the wash process and the final-washing process.

9. Cleaning apparatus (310) according to one of the preceding claims which relates to a cleaning apparatus (310), with the cleaning apparatus (310) comprising at least one sensor (364) for detecting a quantity and/or concentration of the disinfectant which is added in a metered manner to the first rinse liquid (338), with the cleaning apparatus (310) further comprising at least one control system (312) and/or regulation system (314), with the control system (312) and/or the regulation system (314) being designed to generate a signal, in particular an acoustic signal, an optical signal and/or an electrical signal, when the quantity and/or concentration deviate/deviates from a desired value and/or desired range.

10. Cleaning apparatus (310) according to one of the preceding claims which relates to a cleaning apparatus (310), with the cleaning apparatus (310) further comprising an intermediate storage means (360) for storing a concentrate (374) which is produced during reverse osmosis.

11. Cleaning apparatus (310) according to one of the preceding claims which relates to a cleaning apparatus (310), with the cleaning apparatus (310) comprising an intermediate storage means (366) for storing the permeate (376).

12. Cleaning apparatus (310) according to one of the preceding claims which relates to a cleaning apparatus (310), with the cleaning apparatus (310) having a heating apparatus, in particular a boiler, for heating the second rinse liquid (340), in particular the permeate (376).

## Revendications

1. Procédé pour le traitement de produits à nettoyer (320), notamment de vaisselle, dans lequel le produit à nettoyer (320) est soumis à au moins un processus de lavage, dans lequel de la salissure adhérente est éliminée au moins en grande partie, dans lequel le produit à nettoyer (320) est ensuite soumis à un processus de post-rinçage, dans lequel le processus de post-rinçage comporte au moins deux étapes partielles, dans lequel, lors d'une première étape partielle, le produit à nettoyer (320) est exposé à un premier liquide de rinçage (338), dans lequel le premier liquide de rinçage (338) contient un agent de désinfection, dans lequel lors d'une deuxième étape partielle suivante, le produit à nettoyer (320) est exposé à un deuxième liquide de rinçage (340), dans lequel le deuxième liquide de rinçage (340) comprend au moins un perméat (376) produit par osmose inverse, dans lequel le premier liquide de rinçage (338) contient un concentré (374) engendré lors de l'osmose inverse et dans lequel la première étape partielle est effectuée à une température du premier liquide de rinçage (338) qui se situe entre 24°C et 90°C, notamment à 49°C, dans lequel l'au moins un processus de lavage est effectué dans un comme dispositif de nettoyage à deux circuits comportant un circuit de lavage (332) destiné à effectuer le processus de lavage et un circuit de post-rinçage (334) au moins partiellement séparé du circuit de lavage (332).

2. Procédé selon la revendication précédente, dans lequel le deuxième liquide de rinçage (340) est sensiblement exempt d'additifs de rinçage.

3. Procédé selon l'une quelconque des revendications précédentes, dans lequel le deuxième liquide de rinçage (340) est chauffé à une température comprise entre 24°C et 90°C, notamment à 49°C.

4. Procédé selon l'une quelconque des revendications précédentes, dans lequel une quantité et/ou une concentration de l'agent de désinfection ajouté au premier liquide de rinçage (38) est détectée.

5. Procédé selon la revendication précédente, dans lequel, lorsque la quantité et/ou la concentration s'écarte d'une valeur nominale et/ou d'une plage nominale, un signal est délivré, notamment un signal acoustique, un signal optique ou un signal électrique.

6. Dispositif de lavage (310) destiné à effectuer un lavage industriel de produits à nettoyer (320) par utilisation d'un procédé selon l'une quelconque des revendications 1 à 5, dans lequel le dispositif de lavage (310) est conçu pour soumettre le produit à nettoyer (320) à au moins un processus de lavage lors duquel de la salissure adhérente est éliminée au moins en grande partie, dans lequel le dispositif de lavage (310) est en outre conçu pour soumettre ensuite le produit à nettoyer (320) à un processus de post-rinçage, **caractérisé en ce que** le le processus de post-rinçage comporte au moins deux étapes partielles, dans lequel, lors d'une première étape partielle, le produit à nettoyer (320) est exposé à un premier liquide de rinçage (338), dans lequel le premier liquide de rinçage (338) contient un agent de désinfection, dans lequel, lors d'une deuxième étape partielle suivante, le produit à nettoyer est exposé à un deuxième liquide de rinçage (340), dans lequel le deuxième liquide de rinçage (340) comprend au moins un perméat (376) produit par osmose inverse, dans lequel le dispositif de lavage (310) est conçu pour utiliser un concentré engendré lors de l'osmose inverse pendant la première étape partielle du processus de post-rinçage et dans lequel le dispositif de lavage (310) comprend un dispositif de chauffage, notamment une chaudière, pour chauffer le premier liquide de rinçage (338), notamment le concentré (374), et le dispositif de lavage (310) est en outre réalisé sous la forme d'un dispositif de lavage à deux circuits et comprend un circuit de lavage (332) destiné à effectuer le processus de nettoyage et un circuit de post-rinçage (334) au moins partiellement séparé du circuit de lavage (332).

7. Dispositif de lavage (310) selon la revendication précédente, dans lequel le dispositif de lavage (310) comprend une installation d'osmose inverse (368) et est conçu pour utiliser un perméat (376) produit par l'installation d'osmose inverse (368) pendant la deuxième étape partielle.

8. Dispositif de lavage (310) selon l'une des deux revendications précédentes, dans lequel le dispositif de lavage (310) est réalisé sous la forme d'un dispositif de lavage à une seule chambre, dans lequel le dispositif de lavage (310) comprend une chambre de lavage (318) et est conçu pour soumettre le produit à nettoyer (320), dans ladite chambre de lavage (318), au processus de lavage et au processus de post-rinçage.

9. Dispositif de lavage (310) selon l'une quelconque des revendications précédentes concernant un dispositif de lavage (310), dans lequel le dispositif de lavage (310) comprend au moins un capteur (364) destiné à détecter une quantité et/ou une concentration de l'agent de désinfection ajouté au premier liquide de rinçage (338), dans lequel le dispositif de lavage (310) comprend en outre au moins un dispositif de commande (312) et/ou un dispositif de régulation (314), dans lequel le dispositif de commande (312) et/ou le dispositif de régulation (314) est/sont conçu(s) pour générer un signal lorsque la quantité et/ou la concentration s'écarte/s'écartent d'une valeur théorique et/ou d'une plage théorique, notamment un signal acoustique un signal optique ou un signal électrique.

10. Dispositif de lavage (310) selon l'une quelconque des revendications précédentes concernant un dispositif de lavage (310), dans lequel le dispositif de lavage (310) comprend en outre un accumulateur intermédiaire (360) destiné à accumuler un concentré (374) produit lors de l'osmose inverse.

11. Dispositif de lavage (310) selon l'une quelconque des revendications précédentes concernant un dispositif de lavage (310), dans lequel le dispositif de lavage (310) comprend en outre un accumulateur intermédiaire (3660) destiné à accumuler le perméat (376).

12. Dispositif de lavage (310) selon l'une quelconque des revendications précédentes concernant un dispositif de lavage (310), dans lequel le dispositif de lavage (310) comporte un dispositif de chauffage, notamment une chaudière, destiné à chauffer le deuxième liquide de rinçage (340), notamment le perméat (376).
